# EUROPÄISCHE PATENTSCHRIFT

(11) **EP 3 344 380 B1**
(45) Veröffentlichungstag und Bekanntmachung des Hinweises auf die Patenterteilung: **06.11.2019**
(21) Anmeldenummer: 16766868.0
(22) Anmeldetag: 01.09.2016
(51) Int. Cl.: B01J 8/04, C01B 17/765, C01B 17/80

(54) **KATALYTISCHER REAKTOR**
CATALYTIC REACTOR
RÉACTEUR CATALYTIQUE

(30) Priorität: 04.09.2015 DE 102015114885
(43) Veröffentlichungstag der Anmeldung: 11.07.2018
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); GUETTA, Zion, 44309 Dortmund (DE)
(74) Vertreter: thyssenkrupp Intellectual Property GmbH
(86) Internationale Anmeldenummer: PCT/EP2016/070630
(87) Internationale Veröffentlichungsnummer: WO 2017/037183

(56) Entgegenhaltungen:
- EP-A2- 0 279 060
- DE-B1- 2 157 198
- US-A- 1 857 308
- US-A- 5 232 670

## Beschreibung

### Beschreibung

### TECHNISCHES GEBIET

Die vorliegende Erfindung betrifft einen katalytischen Reaktor, insbesondere einen mehrstufigen Kontaktturm zur Umwandlung von Schwefeldioxid (SO₂) zu Schwefeltrioxid (SO₃) bei der Herstellung von Schwefelsäure mit einem sich um eine Reaktormittelachse erstreckenden Mantel und mit zumindest einem Reaktormodul, welches einen an eine mantelseitige Gaszuführung angeschlossenen Gasverteilraum, einen an eine mantelseitige Gasabführung angeschlossenen Gassammelraum sowie ein sich quer zur Reaktormittelachse erstreckendes Katalysatorbett zwischen dem Gasverteilraum und dem Gassammelraum aufweist, wobei der Gasverteilraum sowie der Gassammelraum jeweils von dem Katalysatorbett und einer zugeordneten Reaktorwand begrenzt sind.

### HINTERGRUND

Der katalytische Reaktor weist üblicherweise mehrere übereinander angeordnete Reaktormodule auf, bei denen das Reaktorbett horizontal angeordnet ist, wobei dann die Reaktorbetten jeweils ausgehend von dem zugeordneten Gasverteilraum in Richtung des zugeordneten Gassammelraumes in vertikaler Richtung durchströmt werden.

Zwischen den einzelnen Reaktormodulen wird das Prozessgas von dem katalytischen Reaktor abgeführt, um eine Temperaturregulierung und/oder weitere chemische Umsetzungsprozesse zu ermöglichen.

Mehrstufige katalytische Reaktoren zur Umwandlung von SO₂ zu SO₃ bei der Herstellung von Schwefelsäure werden in der Praxis auch als Kontaktapparate bezeichnet.

Gerade bei der großtechnischen Herstellung von Schwefelsäure und Oleum ergeben sich alleine aufgrund der üblichen Volumina bei der Oxidation von Schwefeldioxid zu Schwefeltrioxid hohe Anforderungen. So sind aus der Praxis katalytische Reaktoren als Beispiel bekannt, welche für die Produktion von 2000 Tonnen Schwefelsäure pro Tag eine Höhe von ca. 23 m, einen Durchmesser von ca. 11,5 m sowie ein Gewicht von ca. 330 Tonnen aufweisen. Als Material wird dabei hochtemperaturbeständiger Edelstahl eingesetzt.

Die unerwünschte Emission von Schwefeldioxid der Anlage zur Herstellung von Schwefelsäure wird wesentlich davon bestimmt, wie vollständig die katalytische Umsetzung von Schwefeldioxid zu Schwefeltrioxid in dem mehrstufigen Kontaktturm erfolgt. Gemäß der Richtlinie TA-Luft von 2002 muss die katalytische Umsetzung größer als 99,8 % und gemäß strengeren Richtlinien sogar größer als 99,9 % sein. Eine möglichst vollständige katalytische Umsetzung ist also nicht nur aus wirtschaftlichen Gründen gewünscht, sondern auch zur Einhaltung von Umweltauflagen häufig notwendig. Dabei ist auch zu berücksichtigen, dass der Grad der katalytischen Umsetzung auch in Abhängigkeit von der Auslastung des katalytischen Reaktors variieren kann.

Aufgrund der typischen Größe des katalytischen Reaktors soll auch eine möglichst einfache Bauform verwirklicht werden, welche eine einfache Montage auf der Baustelle sowie einen möglichst geringen Materialverbrauch ermöglicht.

Ein katalytischer Reaktor, speziell ein mehrstufiger Kontaktturm zur Umwandlung von Schwefeldioxid zu Schwefeltrioxid bei der Herstellung von Schwefelsäure gemäß dem Oberbegriff des Patentanspruches 1 ist aus der WO 86/03187 A1 bekannt. Gerade bei einem Teillastbetrieb einer solchen Anlage ist häufig die Effizienz der katalytischen Umsetzung nicht ausreichend, um strenge gesetzliche Vorgaben zu erfüllen.

Gemäß einem grundlegend alternativen Konstruktionsansatz sind mehrstufige Kontakttürme bekannt, bei denen eine Gasverteilung durch ein Zentralrohr erfolgt. Ein solcher Kontaktturm ist aus der DE 23 37 958 A1 bekannt. Es ergibt sich jedoch der Nachteil einer relativ aufwendigen und damit bei der Herstellung und Montage teuren Konstruktion.

EP0279060 und US5232670 beschreiben mehrstufige katalytische Reaktoren für die Umwandlung von S02 in S03, gekennzeichnet durch eine Höhe des parallel zur Reaktormittelachse des Gasverteilraumes ausgehend von der Mündung der Gaszuführung in Richtung der Reaktormittelachse verringert.

### BESCHREIBUNG DER ERFINDUNG

Vor diesem Hintergrund liegt der vorliegenden Erfindung die Aufgabe zugrunde, einen katalytischen Reaktor, insbesondere einen mehrstufigen Kontaktturm zur Umwandlung von SO₂ zu SO₃ bei der Herstellung von Schwefelsäure anzugeben, welcher sich sowohl durch eine besonders effiziente katalytische Umsetzung als auch eine einfache Bauform auszeichnet.

Gegenstand der Erfindung und Lösung der Aufgabe ist ein katalytischer Reaktor gemäß Patentanspruch 1.

Ausgehend von einem katalytischen Reaktor, insbesondere einem mehrstufigen Kontaktturm zur Umwandlung von SO₂ zu SO₃ bei der Herstellung von Schwefelsäure, ist demnach also erfindungsgemäß vorgesehen, dass die Gaszuführung entweder mantelseitig in den Gasverteilraum mündet oder an ein sich in Richtung der Reaktormittelachse erstreckendes und im Bereich der Reaktormittelachse in den Gasverteilraum mündendes Rohrstück angeschlossen ist, wobei sich eine parallel zur Reaktormittelachse bestimmte Höhe des Gasverteilraums ausgehend von einer Mündung der Gaszuführung bei einem mantelseitigen Anschluss in Richtung der Reaktorlängsachse verringert oder ausgehend von dem im Bereich der Reaktormittelachse mündenden Rohrstück in Richtung des Mantels, vorzugsweise kontinuierlich, verringert, und dass die Gasabführung entweder mantelseitig in dem Gassammelraum mündet oder an ein sich in Richtung der Reaktormittelachse erstreckendes und im Bereich der Reaktormittelachse in den Gassammelraum mündendes Rohrstück angeschlossen ist, wobei sich eine parallel zur Reaktorlängsachse bestimmte Höhe des Gassammelraumes ausgehend von einer Mündung der Gasabführung bei einem mantelseitigen Anschluss in Richtung der Reaktorlängsachse verringert oder ausgehend von dem im Bereich der Reaktormittelachse mündenden Rohrstück in Richtung des Mantels, vorzugsweise kontinuierlich, verringert.

Der vorliegenden Erfindung liegt in diesem Zusammenhang die Erkenntnis zugrunde, dass die Strömung des Prozessgases sich ausgehend von der Mündung der Gaszuführung bzw. dem im Bereich der Reaktormittelachse mündenden Rohrstück in radialer Richtung nach innen bzw. nach außen kontinuierlich dadurch verringert, dass ein Teil des Prozessgases in das Katalysatorbett eintritt. Umso größer also der Abstand zu der entsprechenden Mündung ist, umso geringer sind also die Strömungsvolumina, weshalb vor diesem Hintergrund durch eine entsprechende Reduzierung der Höhe des Gassammelraums eine gleichmäßigere Strömung und Verteilung erreicht werden kann. Insbesondere werden die zur Verfügung stehenden Volumina auch besser ausgenutzt, um unmittelbar im Bereich der Mündung möglichst große Strömungsquerschnitte bereitzustellen.

Der Mantel weist üblicherweise eine Zylinderform auf, wobei jedoch eine kreiszylindrische Form nicht zwingend ist. Insbesondere kann der Mantel auch aus ebenen Blechabschnitten nach Art eines Polygons geformt werden, um die Herstellung zu erleichtern. Auch bei einer von einer Kreisform abweichenden Polygonform oder einer ähnlichen Struktur wird die Richtung von der Reaktormittelachse zu dem Mantel allgemein auch als radiale Richtung bezeichnet.

Gemäß einer ersten Variante der Erfindung ist vorgesehen, dass das Reaktormodul als mantelseitig angeströmtes Modul derart ausgeführt ist, dass sich die parallel zu der Reaktorlängsachse bestimmte Höhe des Gasverteilraums sowie des Gassammelraums ausgehend von dem Mantel in Richtung der Reaktormittelachse vorzugsweise kontinuierlich verringert. Der Gassammelraum und der Gasverteilraum sind dann im Hinblick auf das dazwischen angeordnete Katalysatorbett im Wesentlichen symmetrisch zueinander ausgestaltet.

Bei einer mantelseitigen Anströmung ist zu berücksichtigen, dass sich das Prozessgas ausgehend von der Gaszuführung nicht nur in Richtung der Reaktormittelachse strömt, sondern auch in Umfangrichtung verteilt werden muss. Um eine gleichmäßige Verteilung des Prozessgases in dem Gasverteilraum zu erreichen, kann in einem geeigneten Abstand vor der mantelseitigen Mündung auch eine sich parallel zu der Reaktormittelachse erstreckende Gasleiteinrichtung angeordnet sein. Insbesondere können vor der mantelseitigen Mündung der Gaszuführung einfache Leitbleche vorgesehen sein, welche zumindest einen Teil des Gasstromes in Umfangrichtung umlenken. Entsprechende Gasleiteinrichtungen können beispielsweise in einem Bereich angeordnet werden, der dem 0,7 bis 0,9-fachen des Radius zwischen der Reaktormittelachse und dem Mantel beträgt.

Die an beiden Seiten des Katalysatorbettes angeordneten Reaktorwände weisen bei einem mantelseitig angeströmten Modul in Bezug auf das Katalysatorbett zweckmäßigerweise eine Konkave, ausgehend von der Reaktormittelachse insbesondere konische Form auf. Die Reaktorwände können von einer Zwischenwand, einem Boden oder einem Deckel des Reaktors gebildet werden. Für Zwischenwände ist eine Kegelform bevorzugt, wobei die Zwischenwände auch aus einzelnen ebenen Blechsegmenten zusammengesetzt werden können.

Der Boden und der Deckel können ebenfalls kegelförmig ausgeführt sein, wobei aus Stabilitätsgründen häufig eine gerundete Form vorgesehen ist. Auch bei einer solchen abgerundeten Form kann die beschriebene Änderung der Höhe des Gasverteilraumes bzw. des Gassammelraumes erreicht werden.

Gemäß einer Variante der Erfindung ist vorgesehen, dass das Reaktormodul als zentral angeströmtes Modul derart ausgeführt ist, dass an die mantelseitige Gaszuführung und die mantelseitige Gasabführung jeweils ein sich, ggf. mit Abwinklungen, in Richtung der Reaktormitte erstreckendes und im Bereich der Reaktormittelachse in dem Gasverteilraum bzw. dem Gassammelraum mündendes Rohrstück anschließt, wobei sich die entlang der Reaktorlängsachse bestimmte Höhe des Gasverteilraumes sowie des Gassammelraums ausgehend von der Reaktormittelachse in Richtung des Mantel, vorzugsweise kontinuierlich, verringert. Bei einem solchen zentral angeströmten Modul ergibt sich eine besonders gleichmäßige Verteilung. Direkt an den Mündungen des Rohrstückes ergeben sich die größten Volumenströme, welche dann nach außen einerseits aufgrund der sich erweiternden Geometrie und andererseits durch die Strömung des Prozessgases durch das Katalysatorbett verringert.

Die an beiden Seiten des Katalysatorbettes angeordneten Reaktorwände können wie zuvor beschrieben eine Kegelform aufweisen, wobei sich jedoch für das zentral angeströmte Modul in Bezug auf das Katalysatorbett eine konvexe, ausgehend von der Reaktormittelachse insbesondere konische Form ergibt.

Um eine möglichst kompakte Bauweise zu erreichen, sind die Rohrstücke vorzugsweise innerhalb des Katalysatorbettes angeordnet. Das Katalysatorbett ist also für die Anordnung der Rohrstücke unterbrochen.

Hinsichtlich der konkreten Ausgestaltung der Rohrstücke ergeben sich im Rahmen der Erfindung verschiedene Ausgestaltungsmöglichkeiten. Eine besonders einfache Konstruktion wird dadurch erreicht, dass die Rohrstücke von Abschnitten eines durch ein Trennblech unterbrochenen, durchgehenden Rohres gebildet sind. Durch eine entsprechende Schrägstellung des Trennbleches können die beiden Mündungen in dem Gasverteilraum sowie dem Gassammelraum gemeinsam genau konzentrisch um die Reaktormittelachse angeordnet werden.

Wie bereits zuvor erläutert, weist der katalytische Reaktor, insbesondere bei einer Ausgestaltung als Kontaktturm zur Umwandlung von SO₂ zu SO₃ bei der Herstellung Schwefelsäure, mehrere übereinander angeordnete Reaktormodule auf. Dabei ergibt sich im Rahmen der Erfindung der besondere Vorteil, dass die zentral angeströmten Module einerseits und die radial angeströmten Module andererseits eine genau entgegengesetzte Schrägstellung der Trennbleche erfordern, so dass das beschriebene mantelseitig angeströmte Modul unmittelbar über ein gemeinsames Trennblech an das zuvor beschriebene zentral angeströmte Modul anschließen kann.

Insbesondere können im Rahmen der Erfindung auf besonders einfache Weise in einer sich abwechselnden Folge mehrere mantelseitig angeströmte Module sowie mehrere zentral angeströmte Module in einer Abfolge ABAB angeordnet werden, wobei durch die Veränderung der Höhe in radialer Richtung für beide Modultypen verbesserte Strömungsverhältnisse erreicht werden können.

Bei einer solchen abwechselnden Anordnung zueinander komplementärer Module folgen dann entlang der üblicherweise vertikal ausgerichteten Reaktorlängsachse auf eine nach oben gewölbte Trennwand ein Reaktorbett, eine nach unten gewölbte Trennwand und ein weiteres Reaktorbett, wobei die beiden Reaktorbetten in beschriebener Weise unterschiedlich angeströmt werden.

Schließlich ist im Rahmen der Erfindung auch eine mantelseitige Anströmung mit einer zentralen Abführung bzw. eine zentrale Anströmung mit einer mantelseitigen Abführung kombinierbar. Entsprechende Module können beispielsweise an dem Boden oder dem Deckel des Reaktorbehälters vorgesehen sein.

Der erfindungsgemäße katalytische Reaktor zeichnet sich durch eine besonders einfache Bauform aus, weil auch ohne ein entlang der Reaktorlängsachse, also üblicherweise der Vertikalen, verlaufendes Zentralrohr eine besonders gleichmäßige Strömungsverteilung in den einzelnen Modulen erreicht werden kann. Die einzelnen, in dem Mantel aufgenommenen Bestandteile des katalytischen Reaktors weisen im Wesentlichen eine Kegel- oder Scheibenform auf und können so besonders leicht übereinander angeordnet werden. Bei der Montage kann der katalytische Reaktor also ohne weiteres von unten nach oben sukzessive aufgebaut werden.

Auch die einzelnen Einbauten weisen eine vergleichsweise einfache Form auf. Die zwischen den Modulen angeordneten Trennwände können beispielsweise auf einfache Weise aus Blechstücken zusammengesetzt werden. Dabei ist es auch möglich, die einzelnen Trennwände ohne ein Verschweißen aus mehreren Blechstücken zusammenzusetzen, wozu diese Blechstücke beispielsweise durch eine Nut-Feder-Verbindung, Schrauben oder dergleichen verbunden werden können.

Der beschriebene Aufbau mit einzelnen scheiben- bzw. kegelförmigen Elementen innerhalb des Mantels ermöglicht auch die Integration einer einfachen Stützstruktur durch parallel zu der Reaktorlängsachse, also üblicherweise vertikal verlaufenden Stützen. Dabei ist es möglich, dass über die gesamte Höhe des katalytischen Reaktors durchgehende Stützen vorgesehen sind, welche durch zugeordnete Öffnungen in den Katalysatorbetten sowie Trennwänden geführt sind. Auf besonders einfache Weise können aber auch einzelne Stücke vorgesehen sein, die sich nur über einen Teil der Höhe erstrecken. Für die Aufnahme solcher Stützen können die Trennwände beispielsweise mit Zapfen, Öffnungen oder dergleichen versehen sein, wodurch eine besonders leichte Montage und Demontage möglich ist.

Der erfindungsgemäße katalytische Reaktor weist unabhängig von der konkreten Ausgestaltung der Reaktormodule mantelseitige Gaszuführungen und Gasabführungen auf, so dass sich eine sehr gute Zugänglichkeit ergibt. Entsprechende Gaszuführungen und -abführungen können um den ganzen Umfang verteilt in nahezu beliebiger Geometrie angeordnet werden.

### FIGURENBESCHREIBUNG

Die Erfindung wird im Folgenden anhand einer lediglich ein Ausführungsbeispiel darstellenden Zeichnung erläutert. Es zeigen:
- Fig. 1: ein teilaufgebrochener Schnitt durch ein Reaktormodul eines katalytischen Reaktors,
- Fig. 2: eine alternative Ausgestaltung des Reaktormoduls in einer Ansicht gemäß der Fig. 1,
- Fig. 3 bis Fig. 6: die schematische Schnittansicht von alternativen Ausgestaltungen des katalytischen Reaktors mit einer Vielzahl von in vertikaler Richtung aufeinanderfolgenden Reaktormodulen.

### DETAILLIERTE BESCHREIBUNG DER FIGUREN

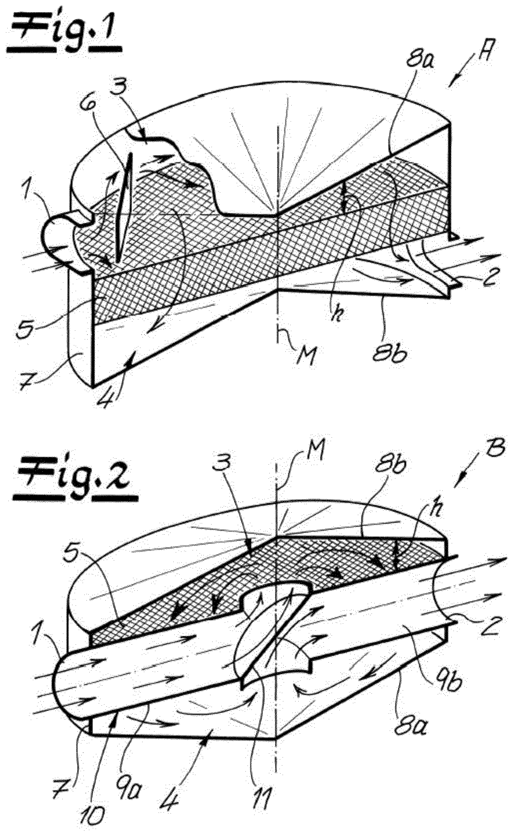

Die Fig. 1 zeigt exemplarisch ein mantelseitig angeströmtes Modul A eines katalytischen Reaktors.

Das mantelseitig angeströmte Modul A ist an eine mantelseitige Gaszuführung 1 und eine mantelseitige Gasabführung 2 angeschlossen. Bei dem mantelseitig angeströmten Modul A gemäß der Fig. 1 mündet die Gaszuführung 1 direkt in einen Gasverteilraum 3, während die Gasabführung 2 mantelseitig an einen Gassammelraum 4 angeschlossen ist. Zwischen dem Gasverteilraum 3 und dem Gassammelraum 4 befindet sich ein Katalysatorbett 5, welches vertikal durchströmt wird. Die Durchströmung des Prozessgases ist durch Pfeile in den Figuren angedeutet.

Um das durch die Gaszuführung 1 zuströmende Prozessgas zunächst gleichmäßig um den Umfang des Gasverteilraums 3 zu verteilen, ist in einem geeigneten Abstand vor der Mündung der Gaszuführung 1 eine Gasleiteinrichtung 6 angeordnet, die aus zwei schräg zueinander angeordneten Leitblechen gebildet ist. Ausgehend von einer um den Umfang des Gasverteilraumes 3 in etwa gleichmäßigen Verteilung des Prozessgases ist zu berücksichtigen, dass in Richtung einer Reaktormittelachse M der Volumenstrom dadurch abnimmt, dass ein Teil des Prozessgases in das Katalysatorbett 5 eintritt. Um optimale Strömungseigenschaften zu erreichen, verringert sich ausgehend von der mantelseitigen Mündung der Gaszuführung 1 an dem Mantel 7 des katalytischen Reaktors eine zwischen dem Katalysatorbett 5 und einer zugeordneten Reaktorwand 8a die parallel zu der Reaktormittelachse M bestimmte Höhe h, so dass sich in der Schnittdarstellung gemäß der Fig. 1 in Richtung der Reaktormittelachse M der Strömungsquerschnitt verringert.

Die in der Fig. 1 dargestellte obere Reaktorwand 8a weist dazu eine Kegelform mit nach unten weisender Spitze auf. Die Reaktorwand 8a kann ohne weiteres aus mehreren, ggf. auch ebenen Blechstücken zusammengesetzt werden.

Der Gassammelraum 4 mit dem mantelseitigen Anschluss der Gasabführung 2 weist eine komplementäre Form auf. Die in der Fig. 1 untere Reaktorwand 8b weist ebenfalls eine Kegelform, jedoch mit nach oben weisender Spitze auf.

Durch die beschriebene Anordnung der Reaktorwände 8a, 8b kann eine besonders gleichmäßige Strömungsverteilung und damit auch eine besonders effiziente katalytische Umsetzung erreicht werden. Der in den Figuren dargestellte katalytische Reaktor ist insbesondere als mehrstufiger Kontaktturm zur Umwandlung von Schwefeldioxid zu Schwefeltrioxid bei der Herstellung von Schwefelsäure vorgesehen.

Die Fig. 2 zeigt ein zentral angeströmtes Modul B. Auch gemäß der Fig. 2 sind eine mantelseitige Gaszuführung 1 und eine mantelseitige Gasabführung 2 vorgesehen, wobei jedoch die Gaszuführung 1 und die Gasabführung 2 jeweils zunächst an ein in dem Katalysatorbett 5 verlaufendes Rohrstück 9a, 9b angeschlossen sind. Die in der Fig. 2 obere Reaktorwand 8b weist eine Kegelform mit nach oben weisender Spitze und die untere Reaktorwand 8a eine Kegelform mit nach unten weisender Spitze auf. Entsprechend sind auch gemäß der Fig. 2 die Strömungsquerschnitte daran angepasst, dass ausgehend von den Mündungen der Rohrstücke 9a, 9b die Strömung in radialer Richtung dadurch abnimmt, dass das Prozessgas sich nicht nur in radialer Richtung verteilt, sondern auch in vertikaler Richtung das Katalysatorbett 5 durchströmt.

Die Fig. 2 zeigt eine besonders einfache Ausgestaltung der Rohrstücke 9a, 9b, welche von den Abschnitten eines durchgehenden Rohres 10 gebildet sind, wobei das durchgehende Rohr 10 durch ein schräg angeordnetes Trennblech 11 in die Rohrstücke 9a und 9b getrennt ist. Durch die schräge Anordnung des Trennbleches 11 können die einander gegenüberliegenden Mündungen der Rohrstücke 9a, 9b koaxial auf der Reaktormittelachse M angeordnet werden.

Bereits aus den Fig. 1 und 2 ist ersichtlich, dass das mantelseitig angeströmte Modul A gemäß der Fig. 1 sowie das zentral angeströmte Modul B der Fig. 2 über eine gemeinsame Reaktorwand 8b aneinander anschließen können.

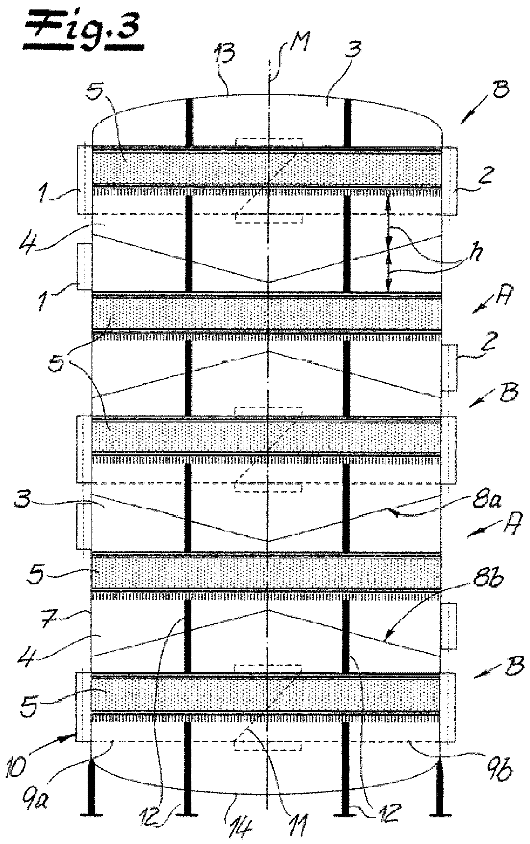

Davon ausgehend zeigt die Fig. 3 einen katalytischen Reaktor, nämlich einen mehrstufigen Kontaktturm zur Umwandlung von Schwefeldioxid zu Schwefeltrioxid bei der Herstellung von Schwefelsäure bei dem in einer Abfolge B/A/B/A/B zentral angeströmte Module B und mantelseitig angeströmte Module A in unmittelbarer Folge angeordnet sind, wobei die aufeinanderfolgenden Module A, B jeweils gemeinsame Reaktorwände 8a, 8b als Trennung aufweisen.

Gemäß der Fig. 3 sind die Gaszuführungen 1 und die Gasabführungen 2 in einer Schnittebene dargestellt. Es versteht sich jedoch, dass die Gaszuführungen 1 und die Gasabführungen 2 üblicherweise gemäß den jeweiligen Anforderungen in geeigneter Konfiguration um den gesamten Umfang des Mantels 7 verteilt sind.

Einer vergleichenden Betrachtung der Fig. 3 mit den Fig. 1 und 2 ist zu entnehmen, dass das Rohr 10 bei dem zentral angeströmten Modul B einen kreisförmigen Querschnitt hat, während die Gaszuführung 1 sowie die Gasabführung 2 bei einem mantelseitig angeströmten Modul A zur Erhöhung des Strömungsquerschnittes auch eine in horizontaler Richtung verbreiterte Form aufweisen können.

Aus der Fig. 3 ist ersichtlich, dass der gesamte mehrstufige Kontaktturm besonders leicht aufgebaut werden kann, weil die Katalysatorbetten 5 sowie die Reaktorwände 8a, 8b scheiben- bzw. kegelförmig sind und so übereinander in dem Mantel 7 geschichtet werden können. Zur Abstützung der einzelnen Elemente können Stützen 12 vorgesehen sein, wobei diese Stützen 12 sich vorzugsweise nicht über die gesamte Höhe des katalytischen Reaktors erstrecken, sondern lediglich die aufeinanderfolgenden Elemente miteinander verbinden.

In der Fig. 3 sind die beiden mantelseitig angeströmten Module A sowie die drei zentral angeströmten Module B im Wesentlichen übereinstimmend ausgeführt.

Bei den zentral angeströmten Modulen B ergibt sich lediglich der Unterschied, dass das oberste sowie das unterste Modul auf jeweils einer Seite nicht von einer innenliegenden Trennwand, sondern von einem Deckel 13 bzw. einem Boden 14 des Reaktors begrenzt sind.

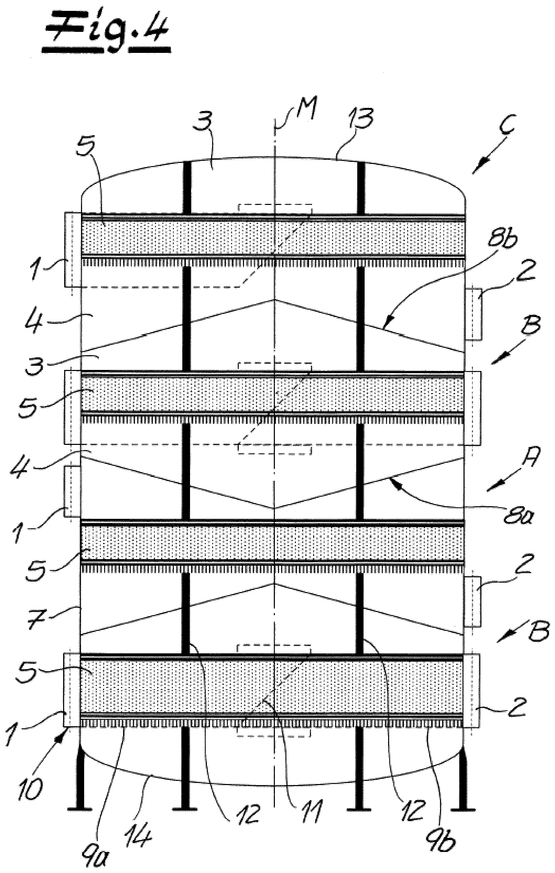

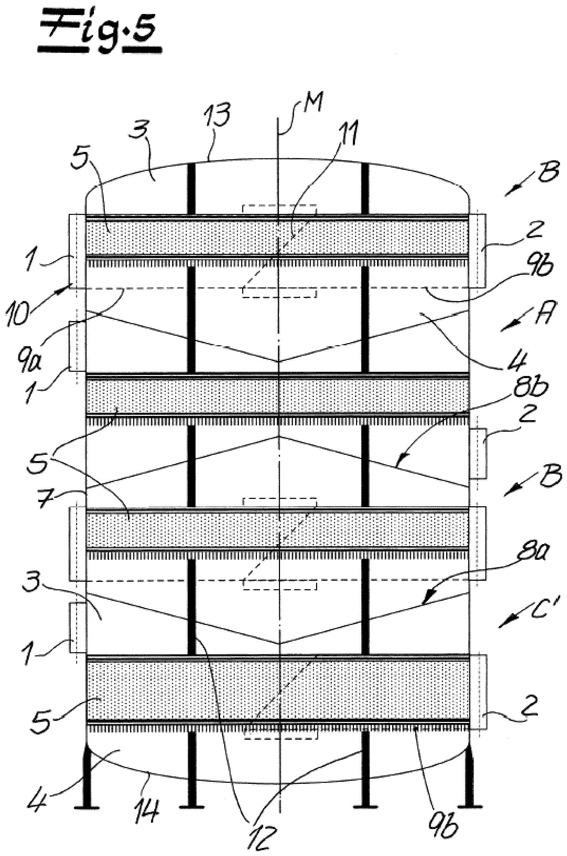

Die Fig. 4 und 5 zeigen eine alternative Ausgestaltung des katalytischen Reaktors mit insgesamt nur vier Modulen, wobei jeweils drei Module genau wie bei der Ausgestaltung gemäß der Fig. 3 ausgeführt sind.

Das oberste Modul C der Fig. 4 zeigt davon ausgehend eine weitere von der Erfindung umfasste Ausgestaltung, bei der die Anströmung zentral erfolgt, das Prozessgas jedoch mantelseitig abgeführt wird. Dieses Modul C kombiniert also die zuvor beschriebenen Merkmale des mantelseitig angeströmten Moduls A sowie des zentral angeströmten Moduls B, wobei die beiden Trennwände des entsprechenden Moduls C im Gegensatz zu den mantelseitigen Modulen A und den zentral angeströmten Modulen B in der gleichen Richtung abgewinkelt bzw. gebogen sind. So wird das in Rede stehende Modul C einerseits von dem nach oben gewölbten Deckel 13 sowie andererseits von einer kegelförmigen Reaktorwand 8b mit einer nach oben weisenden Spitze begrenzt.

Die Fig. 5 zeigt eine Ausgestaltung, bei der als Alternative zu der Fig. 4 das unterste Modul C' radial angeströmt wird, während das Prozessgas über ein entsprechendes Rohrstück 9b zentral abgeführt wird. Dieses Modul C' wird durch den nach unten gewölbten Boden 14 sowie eine kegelförmige Reaktorwand 8a mit nach unten weisender Spitze begrenzt.

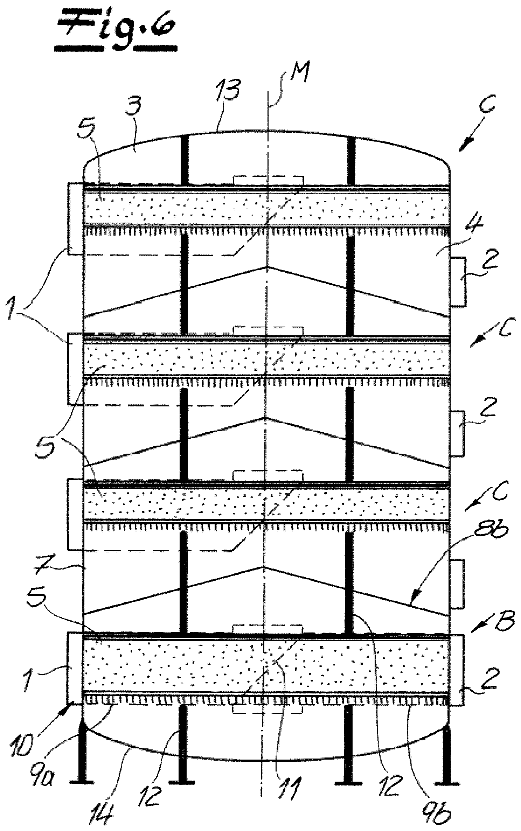

Schließlich zeigt die Fig. 6, dass entsprechend kombinierte Module C, B nicht nur an dem oberen und an dem unteren Ende des katalytischen Reaktors vorgesehen sein können.

## Patentansprüche

1. Katalytischer Reaktor mit einem sich um eine Reaktormittelachse (M) erstreckenden Mantel (7) und mit zumindest einem Reaktormodul (A, B), welches einen an eine mantelseitige Gaszuführung (1) angeschlossenen Gasverteilraum (3), einen an eine mantelseitige Gasabführung (2) angeschlossenen Gassammelraum (4) sowie ein sich quer zur Reaktormittelachse (M) erstreckendes Katalysatorbett (5) zwischen dem Gasverteilraum (3) und dem Gassammelraum (4) aufweist, wobei der Gasverteilraum (3) sowie der Gassammelraum (4) jeweils von dem Katalysatorbett (5) und einer zugeordneten Reaktorwand (8a, 8b) begrenzt sind,
**wobei**
die Gaszuführung (1) entweder
- mantelseitig in den Gasverteilraum (3) mündet, oder
- an ein sich in Richtung der Reaktormittelachse (M) erstreckendes und im Bereich der Reaktormittelachse (M) in dem Gasverteilraum (3) mündendes Rohrstück (9a) angeschlossen ist,
wobei sich eine parallele zur Reaktormittelachse (M) bestimmte Höhe (h) des Gasverteilraumes (3) ausgehend von einer Mündung der Gaszuführung (1) bei einem mantelseitigen Anschluss in Richtung der Reaktormittelachse (M) verringert oder ausgehend von dem im Bereich der Reaktormittelachse (M) mündenden Rohrstück (9b) in Richtung des Mantels (7) verringert, und dass
die Gasabführung (2) entweder
- mantelseitig in den Gassammelraum (3) mündet oder
- an ein sich in Richtung der Reaktormittelachse (M) erstreckendes und im Bereich der Reaktormittelachse (M) in dem Gassammelraum (4) mündendes Rohrstück (9b) angeschlossen ist,
wobei sich eine parallel zur Reaktormittelachse (M) bestimmte Höhe (h) des Gassammelraums (4) ausgehend von einer Mündung der Gasabführung (2) bei einem mantelseitigen Anschluss in Richtung der Reaktormittelachse (M) verringert oder ausgehend von dem im Bereich der Reaktormittelachse (M) mündenden Rohrstück (9b) in Richtung des Mantels (7) verringert,
**dadurch gekennzeichnet, dass**
- das Reaktormodul als mantelseitig angeströmtes Modul (A) derart ausgeführt ist, dass sich die parallel zur Reaktormittelachse (M) bestimmte Höhe (h) des Gasverteilraumes (3) sowie des Gassammelraumes (4) ausgehend von dem Mantel (7) in Richtung der Reaktormittelachse (M) verringert und die an beiden Seiten des Katalysatorbettes (5) angeordneten Reaktorwände (8a, 8b) des mantelseitig angeströmten Moduls in Bezug auf das Katalysatorbett eine konkave, ausgehend von der Reaktormittelachse insbesondere konische Form aufweisen,
oder
das Reaktormodul als zentral angeströmtes Modul (B) derart ausgeführt ist, dass an die mantelseitige Gaszuführung (1) und die mantelseitige Gasabführung (3) jeweils ein sich in Richtung der Reaktormittelachse (M) erstreckendes und im Bereich der Reaktormittelachse in den Gasverteilraum (3) bzw. den Gassammelraum (4) mündendes Rohrstück (9a, 9b) anschließt, wobei sich die entlang der Reaktormittelachse (M) bestimmte Höhe (h) des Gasverteilraumes (3) sowie des Gassammelraumes (4) ausgehend von der Reaktormittelachse (M) in Richtung des Mantels (7) verringert und die an beiden Seiten des Katalysatorbettes (5) angeordneten Reaktorwände (8a, 8b) des mantelseitig angeströmten Moduls (B) in Bezug auf das Katalysatorbett (5) eine konvexe, ausgehend von der Reaktormittelachse (M) insbesondere konische Form aufweisen.

2. Katalytischer Reaktor nach Anspruch 1, **dadurch gekennzeichnet, dass** in dem Gasverteilraum (3) vor der mantelseitigen Mündung der Gaszuführung (1) eine sich parallel zu der Reaktormittelachse (M) erstreckende Gasleiteinrichtung (6) angeordnet ist.

3. Katalytischer Reaktor nach Anspruch 1, **dadurch gekennzeichnet, dass** die Rohrstücke (9a, 9b) innerhalb des Katalysatorbettes (5) angeordnet sind.

4. Katalytischer Reaktor nach einem der Ansprüche 1 bis 3, **dadurch gekennzeichnet, dass** die Rohrstücke (9a, 9b) von Abschnitten eines durch ein Trennblech (11) unterbrochenen, durchgehenden Rohres (10) gebildet sind.

5. Katalytischer Reaktor nach einem der Ansprüche 1 bis 4, **dadurch gekennzeichnet, dass** ein mantelseitig angeströmtes Modul (A) unmittelbar an ein zentral angeströmtes Modul (B) anschließt.

6. Katalytischer Reaktor nach Anspruch 5, **dadurch gekennzeichnet, dass** in einer sich abwechselnden Folge mehrere mantelseitig angeströmte Module (A) sowie mehreren zentral angeströmten Module (B) angeordnet sind.

## Claims

1. Catalytic reactor having a shell (7) which extends about a reactor centre axis (M) and having at least one reactor module (A, B) which comprises a gas distribution chamber (3) connected to a shell-side gas feed (1), a gas collection chamber (4) connected to a shell-side gas discharge (2), and, between the gas distribution chamber (3) and the gas collection chamber (4), a catalyst bed (5) which extends transversely to the reactor centre axis (M), wherein the gas distribution chamber (3) and the gas collection chamber (4) are each bounded by the catalyst bed (5) and an associated reactor wall (8a, 8b),
**wherein**
the gas feed (1) either
- opens into the gas distribution chamber (3) on the shell side, or
- is connected to a pipe length (9a) which extends towards the reactor centre axis (M) and opens into the gas distribution chamber (3) in the region of the reactor centre axis (M),
wherein a height (h), determined parallel to the reactor centre axis (M), of the gas distribution chamber (3) reduces towards the reactor centre axis (M) starting from a mouth of the gas feed (1) in the case of a shell-side connection or reduces towards the shell (7) starting from the pipe length (9b) which opens into the region of the reactor centre axis (M), and in that the gas discharge (2) either
- opens into the gas collection chamber (3) on the shell side or
- is connected to a pipe length (9b) which extends towards the reactor centre axis (M) and opens into the gas collection chamber (4) in the region of the reactor centre axis (M),
wherein a height (h), determined parallel to the reactor centre axis (M), of the gas collection chamber (4) reduces towards the reactor centre axis (M) starting from a mouth of the gas discharge (2) in the case of a shell-side connection or reduces towards the shell (7) starting from the pipe length (9b) which opens into the region of the reactor centre axis (M),
**characterized in that**
- the reactor module as a module (A) which receives inflow on the shell side is constructed such that the height (h), determined parallel to the reactor centre axis (M), of the gas distribution chamber (3) and of the gas collection chamber (4) reduces towards the reactor centre axis (M) starting from the shell (7) and the reactor walls (8a, 8b) which are arranged on both sides of the catalyst bed (5) of the module which receives inflow on the shell side have a concave shape, in particular a conical shape, starting from the reactor centre axis, in relation to the catalyst bed,
or
the reactor module as a module (B) which receives central inflow is constructed such that a pipe length (9a, 9b) which extends towards the reactor centre axis (M) and respectively opens into the gas distribution chamber (3) and the gas collection chamber (4) in the region of the reactor centre axis in each case adjoins the shell-side gas feed (1) and the shell-side gas discharge (3), wherein the height (h), determined along the reactor centre axis (M) of the gas distribution chamber (3) and of the gas collection chamber (4) reduces towards the shell (7) starting from the reactor centre axis (M) and the reactor walls (8a, 8b) which are arranged on both sides of the catalyst bed (5) of the module (B) which receives inflow on the shell side have a convex shape, in particular a conical shape, starting from the reactor centre axis (M), in relation to the catalyst bed (5).

2. Catalytic reactor according to Claim 1, **characterized in that** a gas guide means (6) which extends parallel to the reactor centre axis (M) is arranged in the gas distribution chamber (3) in front of the shell-side mouth of the gas feed (1).

3. Catalytic reactor according to Claim 1, **characterized in that** the pipe lengths (9a, 9b) are arranged within the catalyst bed (5).

4. Catalytic reactor according to one of Claims 1 to 3, **characterized in that** the pipe lengths (9a, 9b) are formed from portions of a through-pipe (10) which is interrupted by a partition plate (11).

5. Catalytic reactor according to one of Claims 1 to 4, **characterized in that** a module (A) which receives inflow on the shell side directly adjoins a module (B) which receives central inflow.

6. Catalytic reactor according to Claim 5, **characterized in that** a plurality of modules (A) which receive inflow on the shell side and a plurality of modules (B) which receive central inflow are arranged in an alternating succession.

## Revendications

1. Réacteur catalytique, comprenant une enveloppe (7) qui s'étend autour d'un axe central de réacteur (M) et comprenant au moins un module de réacteur (A, B) qui possède un espace de distribution de gaz (3), raccordé à une arrivée de gaz (1) côté enveloppe, un espace d'accumulation de gaz (4), raccordé à une évacuation de gaz (2) côté enveloppe ainsi qu'un lit catalytique (5) qui s'étend transversalement par rapport à l'axe central de réacteur (M) entre l'espace de distribution de gaz (3) et l'espace d'accumulation de gaz (4), l'espace de distribution de gaz (3) ainsi que l'espace d'accumulation de gaz (4) étant respectivement délimités par le lit catalytique (5) et une paroi de réacteur (8a, 8b) associée,
l'arrivée de gaz (1) soit
* débouchant dans l'espace de distribution de gaz (3) du côté de l'enveloppe, soit
* étant raccordée à une pièce tubulaire (9a) qui s'étend dans la direction de l'axe central de réacteur (M) et débouche dans l'espace de distribution de gaz (3) dans la zone de l'axe central de réacteur (M),
une hauteur (h) de l'espace de distribution de gaz (3), définie parallèlement à l'axe central de réacteur (M), diminuant en direction de l'axe central de réacteur (M) à partir d'un débouché de l'arrivée de gaz (1) dans le cas d'un raccordement du côté de l'enveloppe, ou diminuant en direction de l'enveloppe (7) à partir de la pièce tubulaire (9b) qui débouche dans la zone de l'axe central de réacteur (M), et en ce que
l'évacuation de gaz (2) soit
- débouche dans l'espace de distribution de gaz (3) du côté de l'enveloppe, soit
- est raccordée à une pièce tubulaire (9b) qui s'étend dans la direction de l'axe central de réacteur (M) et débouche dans l'espace d'accumulation de gaz (4) dans la zone de l'axe central de réacteur (M),
une hauteur (h) de l'espace d'accumulation de gaz (4), définie parallèlement à l'axe central de réacteur (M), diminuant en direction de l'axe central de réacteur (M) à partir d'un débouché de l'évacuation de gaz (2) dans le cas d'un raccordement du côté de l'enveloppe, ou diminuant en direction de l'enveloppe (7) à partir de la pièce tubulaire (9b) qui débouche dans la zone de l'axe central de réacteur (M),
**caractérisé en ce que**
- le module de réacteur est réalisé sous la forme d'un module (A) balayé du côté de l'enveloppe de telle sorte que la hauteur (h) de l'espace de distribution de gaz (3) ainsi que de l'espace d'accumulation de gaz (4), définie parallèlement à l'axe central de réacteur (M), diminue à partir de l'enveloppe (7) en direction de l'axe central de réacteur (M) et les parois de réacteur (8a, 8b) du module balayé du côté de l'enveloppe, disposées des deux côtés du lit catalytique (5), présentent une forme concave par rapport au lit catalytique, notamment conique à partir de l'axe central de réacteur,
ou
- le module de réacteur est réalisé sous la forme d'un module (B) balayé de manière centrale de telle sorte qu'une pièce tubulaire (9a, 9b) qui s'étend en direction de l'axe central de réacteur (M) et débouche dans l'espace de distribution de gaz (3) ou l'espace d'accumulation de gaz (4) dans la zone de l'axe central de réacteur se raccorde respectivement à l'arrivée de gaz (1) côté enveloppe et à l'évacuation de gaz (3) côté enveloppe, la hauteur (h) de l'espace de distribution de gaz (3) ainsi que celle de l'espace d'accumulation de gaz (4), définie le long de l'axe central de réacteur (M), diminuant à partir de l'axe central de réacteur (M) en direction de l'enveloppe (7) et les parois de réacteur (8a, 8b) du module (B) balayé du côté de l'enveloppe, disposées des deux côtés du lit catalytique (5), présentant une forme convexe par rapport au lit catalytique (5), notamment conique à partir de l'axe central de réacteur (M).

2. Réacteur catalytique selon la revendication 1, **caractérisé en ce qu'**un dispositif de guidage de gaz (6) qui s'étend parallèlement à l'axe central de réacteur (M) est disposé dans l'espace de distribution de gaz (3) avant le débouché côté enveloppe de l'arrivée de gaz (1).

3. Réacteur catalytique selon la revendication 1, **caractérisé en ce que** les pièces tubulaires (9a, 9b) sont disposées à l'intérieur du lit catalytique (5).

4. Réacteur catalytique selon l'une des revendications 1 à 3, **caractérisé en ce que** les pièces tubulaires (9a, 9b) sont formées par des portions d'un tube (10) d'un seul tenant, interrompu par une tôle de séparation (11).

5. Réacteur catalytique selon l'une des revendications 1 à 4, **caractérisé en ce qu'**un module (A) balayé du côté de l'enveloppe se rattache directement à un module (B) balayé de manière centrale.

6. Réacteur catalytique selon la revendication 5, **caractérisé en ce que** plusieurs modules (A) balayés du côté de l'enveloppe ainsi que plusieurs modules (B) balayés de manière centrale sont disposés selon une séquence alternée.
